# EUROPÄISCHE PATENTSCHRIFT

(11) **EP 0 724 324 B1**
(45) Veröffentlichungstag und Bekanntmachung des Hinweises auf die Patenterteilung: **08.03.2000**
(21) Anmeldenummer: 96101107.9
(22) Anmeldetag: 26.01.1996
(51) Int. Cl.: H02K 9/14, H02K 11/04, H02K 5/20

(54) **Elektromotor mit Lüfter**
Electric motor with fan
Moteur électrique avec ventilateur

(30) Priorität: 28.01.1995 DE 19502600
(43) Veröffentlichungstag der Anmeldung: 31.07.1996
(73) Patentinhaber: WILO GmbH, D-44263 Dortmund (DE)
(72) Erfinder: Kaul, Günter, D-58456 Witten (DE); Kech, Hansjürgen, 58313 Herdecke (DE)
(74) Vertreter: COHAUSZ HANNIG DAWIDOWICZ & PARTNER

(56) Entgegenhaltungen:
- DE-B- 2 700 530
- FR-A- 2 608 332
- GB-A- 2 214 722

## Beschreibung

Die Erfindung betrifft einen Elektromotor mit einem außen an der Motorenaußenwand befestigten Kasten und mit einer stirnseitig angeordneten Lüfterhaube, die ein Lüfterrad überdeckt, des die Motorenaußenwand kühlt, wobei nahe des außen befestigten Kastens eine radiale Öffnung angeordnet ist, durch die ein Luftstrom radial austritt, um zu einem zu kühlenden Bereich des Kastens zu gelangen.

Es ist bekannt, an der Stirnseite eines Elektromotors ein Lüfterrad auf dem Wellenende des Elektromotors anzuordnen, das von einer Lüfterhaube überdeckt ist und mit seinem erzeugten Luftstrom die Außenseite des Motorengehäuses kühlt. Hierbei steht der Außenrand der Lüfterhaube soweit vor, daß der Luftstrom achsparallel über die Motorenaußenseite geführt wird. Dieser Luftstrom erreicht hierbei auch einen außen am Motorengehäuse befestigten Klemmenkasten, siehe europäisches Patent Nr. 0 254 930.

Aus der GB 2 214 722 ist ein Elektromotor der eingangs genannten Art bekannt, der in der Motorenaußenwand eine Öffnung aufweist, durch die ein Teil des vom Lüfter erzeugten Luftstroms in das Innere des außen befestigten Kastens gelangt. Eine Kühlung außem am Kasten angeordneter Bauteile ist dabei nicht möglich.

Aufgabe der Erfindung ist es, einen Elektromotor der eingangs genannten Art so zu verbessern, daß bei Anordnen unterschiedlicher Kästen beim selben Elektromotor ein Kühlen des außen angeordneten Kastens nur dann geschaffen wird, wenn der Kasten Bauteile enthält, die ein Kühlen erfordern.

Diese Aufgabe wird erfindungsgemäß dadurch gelöst, daß die radiale Öffnung im Außenrand der Lüfterhaube angeordnet ist, und daß der außen befestigte Kasten mindestens ein zu kühlendes elektronisches Bauteil aufweist, das mit außen am Kasten angeordneten Kühlrippen verbunden ist, die im radial austretenden Luftstrom liegen.

Der aus der Lüfterhaube radial austretende abgezweigte Teilluftstrom kann in der Weise genutzt werden, daß in diesen radialen Luftstrom zu kühlende Bereiche des Kastens insbesondere Kühlrippen gestellt werden. Ist dagegen ein Kasten außen am Elektromotor befestigt, der einer solchen Kühlung nicht bedarf, so werden keine zu kühlenden Flächen in diesen abgezweigten Luftstrom gebracht. Somit läßt die erfindungsgemäße Lösung auf konstruktiv besonders einfache Weise es zu, wahlweise außen angeordnete Bauteile zu kühlen oder eine Kühlung zu unterlassen.

Besonders vorteilhaft ist es hierbei, wenn die radiale Öffnung durch einen vorspringenden Bereich verschließbar ist, der an einem nicht zu kühlenden Kasten, insbesondere einem Klemmenkasten vorsteht.

Ein solcher vorspringender Bereich an einem nicht zu kühlenden äußeren Kasten führt dazu, daß bei der Montage eines solchen Kastens automatisch die radiale Ausströmöffnung geschlossen wird und damit je nach Wahl des Kastens mit oder ohne Vorsprung bestimmt wird, ob eine Kühlung erfolgt. Dies führt zu einem modularen Bausystem mit einer automatischen Anpassung an die Kühlerfordernisse, ohne den Elektromotor selber verändern zu müssen.

Ein Ausführungsbeispiel ist in den Zeichnungen dargestellt und wird im folgenden näher beschrieben. Es zeigen:
- Figur 1:: Einen Elektromotor in teilweisem Schnitt mit aufgesetztem, zu kühlenden Kasten und
- Figur 2:: einen Elektromotor entsprechend Anspruch 1 mit aufgesetztem, nicht zu kühlenden Kasten.

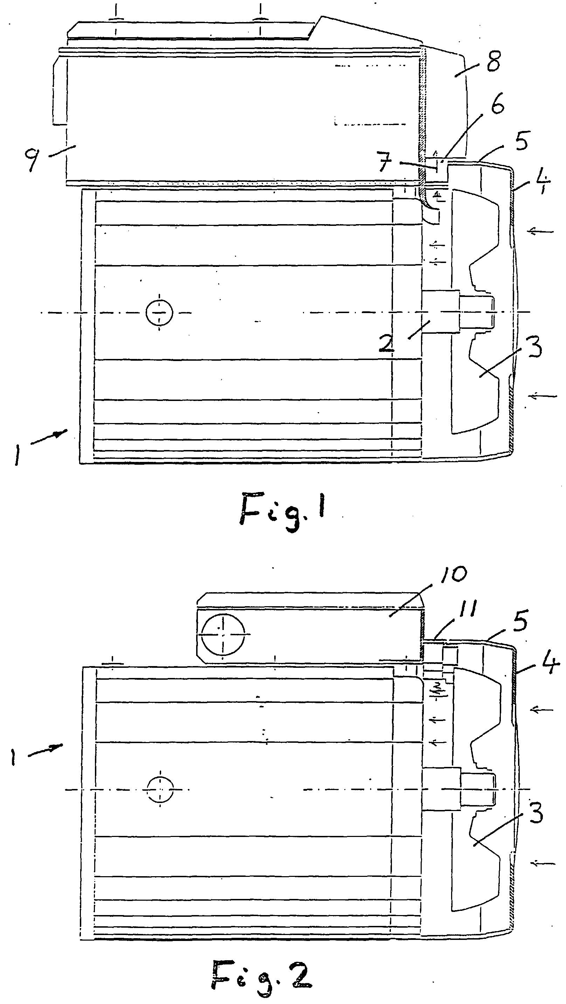

An der Stirnseite eines Elektromotors 1 tritt eine Welle 2 aus, auf der ein Lüfterrad 3 befestigt ist. Das Lüfterrad ist von einer Lüfterhaube 4 überdeckt, die mit ihrem im wesentlichen zylindrischen Außenrand 5 über die Außenwand des Motors soweit übersteht, daß der vom Lüfterrad 3 erzeugte Luftstrom die Außenseite des Motors überstreicht.

Im Außenrad 5 ist mindestens eine radiale Öffnung 6 nahe dem Motorengehäuse angeordnet, durch die ein radialer Luftstrom 7 austritt. In diesen Luftstrom 7 sind Kühlrippen 8 gestellt, die an einem Kasten 9 außen befestigt sind, der an der Außenseite des Motorengehäuses befestigt ist.

Der Kasten 9 weist elektronische Bauteile, insbesondere ein Regelmodul mit Frequenzumformer auf, die gekühlt werden müssen. Die wärmeerzeugenden Bauteile sind mit den Kühlrippen 8 verbunden, wobei die Kühlrippen 8 vorzugsweise radial zur Achse des Elektromotors angeordnet sind.

Wird statt des Kastens 9 ein Kasten, insbesondere ein Klemmenkasten außen am Motor befestigt, der einer Kühlung nicht bedarf, so weist dieser Kasten 10 einen Vorsprung 11 auf, der am Gehäuse des Kastens 10 angeformt oder als Einzelteil befestigt ist und die radiale Öffnung 6 verschließt. Hiermit wird der radiale Luftstrom 7 verhindert und der gesamte vom Lüfterrad 3 erzeugte Luftstrom wird der Außenseite des Motorengehäuses zugeführt.

## Patentansprüche

1. Elektromotor (1) mit einem außen an der Motorenaußenwand befestigten Kasten (9, 10) und mit einer stirnseitig angeordneten Lüfterhaube (4), die ein Lüfterrad (3) überdeckt, das die Motorenaußenwand kühlt, wobei nahe des außen befestigten Kastens (9) eine radiale Öffnung (6) angeordnet ist, durch die ein Luftstrom (7) radial austritt, um zu einem zu kühlenden Bereich (8) des Kastens (9) zu gelangen, **dadurch gekennzeichnet**, daß die radiale Öffnung (6) im Außenrand (5) der Lüfterhaube (4) angeordnet ist, und daß der außen befestigte Kasten (9) mindestens ein zu kühlendes elektronisches Bauteil aufweist, das mit außen am Kasten angeordneten Kühlrippen (8) verbunden ist, die im radial austretenden Luftstrom (7) liegen.

2. Elektromotor nach Anspruch 1, **dadurch gekennzeichnet**, daß die Kühlrippen (8) radial oder im wesentlichen radial zur Achse des Elektromotors (1) angeordnet sind.

3. Elektromotor nach Anspruch 1 oder 2, **dadurch gekennzeichnet**, daß die radiale Öffnung (6) durch einen vorspringenden Bereich (11) verschließbar ist, der an einem nicht zu kühlenden Kasten (10), insbesondere einem Klemmenkasten vorsteht.

## Claims

1. An electric motor (1) having a box (9, 10) attached on the outside to the motor outside wall, and an end face fan hood (4) covering a fan wheel (3) which cools the motor outside wall, while disposed adjacent the externally attached box (9) is a radial opening (6) through which an airflow (7) emerges radially, to pass to a zone (8) of the box (9) to be cooled,
**characterised in that** the radial opening (6) is disposed in the outside edge (5) of the fan hood (4), and the externally attached box (9) has at least one electronic component to be cooled which is connected to cooling fins (8) disposed externally on the box and lying in the radially emerging airflow (7).

2. An electric motor according to claim 1,
**characterised in that** the cooling fins (8) are disposed radially or substantially radially of the axis of the electric motor (1).

3. An electric motor according to claims 1 or 2,
**characterised in that** the radial opening (6) can be closed by a projecting zone (11) which projects on a box (10), more particularly a terminal box, which is not to be cooled.

## Revendications

1. Moteur électrique (1) avec un coffre (9, 10) fixé extérieurement sur le paroi extérieure du moteur et avec un capotage de ventilateur (4) disposé frontalement qui recouvre une roue de ventilateur (3) qui refroidit la paroi extérieure du moteur, une ouverture (6) radiale, par laquelle sort radialement un flux d'air (7) pour arriver à une zone (8) du coffre (9) à refroidir, étant disposée près du coffre (9) fixé extérieurement,
caractérisé en ce que l'ouverture (6) radiale est disposée dans le bord extérieur (5) du capotage de ventilateur (4) et que le coffre (9) fixé extérieurement présente au moins un composant électronique à refroidir qui est relié à des nervures de refroidissement (8) disposées extérieurement sur le coffre qui se trouvent dans le flux d'air (7) sortant radialement.

2. Moteur électrique selon la revendication 1,
caractérisé en ce que les nervures de refroidissement (8) sont disposées radialement ou sensiblement radialement par rapport à l'axe du moteur électrique (1),

3. Moteur électrique selon la revendication 1 ou 2,
caractérisé en ce que l'ouverture (6) radiale peut être fermée par une zone (11) saillante qui fait saillie sur un coffre (10) ne devant pas être refroidi, en particulier une boite de bornes.
